(19) Europäisches Patentamt / European Patent Office / Office européen des brevets

(11) **EP 4 265 670 A1**

(12) **EUROPEAN PATENT APPLICATION**
published in accordance with Art. 153(4) EPC

(43) Date of publication:
25.10.2023 Bulletin 2023/43

(21) Application number: 21905156.2

(22) Date of filing: 14.09.2021

(51) International Patent Classification (IPC):
$C08J\ 5/18\ ^{(2006.01)}$ $C08L\ 23/06\ ^{(2006.01)}$
$C08J\ 9/26\ ^{(2006.01)}$ $H01M\ 50/403\ ^{(2021.01)}$
$H01M\ 50/417\ ^{(2021.01)}$

(52) Cooperative Patent Classification (CPC):
Y02E 60/10

(86) International application number:
PCT/CN2021/118236

(87) International publication number:
WO 2022/127224 (23.06.2022 Gazette 2022/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 15.12.2020 CN 202011478177

(71) Applicant: Shanghai Energy New Materials
Technology Co., Ltd.
Shanghai 201399 (CN)

(72) Inventors:
• CHENG, Yue
  Shanghai 201399 (CN)
• GONG, Xiaoming
  Shanghai 201399 (CN)
• PENG, Kun
  Shanghai 201399 (CN)
• YU, Shaobo
  Shanghai 201399 (CN)
• ZHUANG, Zhi
  Shanghai 201399 (CN)

(74) Representative: Cabinet Chaillot
16/20, avenue de l'Agent Sarre
B.P. 74
92703 Colombes Cedex (FR)

(54) **POLYOLEFIN MICROPOROUS MEMBRANE, MANUFACTURING SYSTEM THEREFOR, BATTERY SEPARATOR, AND ELECTROCHEMICAL DEVICE**

(57) The present invention relates to the field of battery separators. Specifically, disclosed is a polyolefin microporous membrane of which the membrane thickness is 2-30 μm, the puncture strength is 1000-2000 gf, the tensile strength in direction MD is 3200-5000 kgf/cm$^2$, the tensile strength in direction TD is 2800-4800 kgf/cm$^2$, the porosity is 40% to 57%, the maximum pore diameter is 33-48 nm, the gas permeation rate is 10-400 s/100 mL, the impedance is 0.3-0.9 Ω/cm$^2$, a manufacturing system therefor, a coated separator using the base membrane, and an electrochemical apparatus. The polyolefin microporous membrane of the present invention is provided with excellent properties and, with the thickness, tensile strength, puncture strength, air permeability, porosity, and thermal shrinkage thereof satisfying applications having high requirements on the thickness and mechanical strength of the microporous membrane, is very suitable for use in the field of power lithium-ion battery separators.

FIG.1

EP 4 265 670 A1

**Description**

**TECHNICAL FIELD**

The present disclosure relates to the field of battery separators, and in particular to a polyolefin microporous membrane and a manufacturing system thereof, and a battery separator and an electrochemical apparatus.

**BACKGROUND**

Polyolefin microporous membranes are usually used in battery separators, electrolytic capacitor separators, ultrafiltration membranes and microfiltration membranes and medical membranes, etc. For digital lithium ion batteries and power lithium ion batteries, lightness and thinning have become a trend while ensuring the performance of the separators. The development of the polyolefin microporous membranes toward thin film can increase a layer number of the electrode layers, helping increase the energy density and the capacity of the lithium batteries. This makes high output possible. However, the existing ultrathin polyolefin microporous membranes have poor strength. When the ultrathin polyolefin microporous membranes serving as separators and the electrodes are wound together under high tension, the ultrathin polyolefin microporous membranes may break up easily. Therefore, in the prior arts, it is still impossible to manufacture an ultrathin high-strength separator with uniform thickness and stable quality.

In the Chinese patent application number CN 102136557 A, there is disclosed a preparation method for a lithium ion battery separator. In this method, ultrahigh molecular polyethylene is used as the main material to prepare a good-strength separator with a thickness of up to 20μm.

In the Japanese patent JPH0873643 A, there is disclosed that a preparation method for a lithium ion battery separator. In this method, polyethylene with a viscosity average molecular weight above 100,000 is used to prepare a separator with specific thickness, permeability, porosity, and tensile elongation, which has a thickness of 20 to 40μm.

**SUMMARY**

The formulas and methods disclosed in the above patents and applications can address the problem of membrane strength in conventional technology. However, there is still the following defect: excessively large membrane thickness which fails to satisfy the requirements of ultra-thinness and high strength. The technical difficult point of the ultrathin high-strength polyolefin microporous membranes lies in that the performances such as thickness, strength, and porosity, of the ultrathin separators cannot be considered at the same time and the separators have poor thickness uniformity.

Therefore, in order to solve the above defects existing in the prior arts, the present disclosure provides a polyolefin microporous membrane having high porosity, ultra-thinness, high strength good thickness uniformity, and capable of improving the battery performance and reducing the battery costs.

In order to, achieve the above objectives, the technical scheme of the present disclosure is implemented as follows.

One object of the present disclosure is to provide a polyolefin microporous membrane with a thickness of 2 to 30μm and a puncture strength of 1000 to 2000gf.

Furthermore, a tensile strength along an MD direction is 3200 to 5000kgf/cm$^2$, and a tensile strength along a TD direction is 2800 to 4800kgf/cm$^2$.

Furthermore, an elongation along the MD direction is 47 to 98% and an elongation along the TD direction is 63 to 110%.

Furthermore, a porosity is 40% to 57%, a maximum pore size is 33 to 48 nm, and a gas permeability is 10 to 400 seconds/100ml.

Furthermore, an impedance is 0.3 to 0.9Ω/cm$^2$.

Furthermore, the polyolefin microporous membrane is made of polyethylene with a weight average molecular weight of 4.0 to 8.0×106.

Another object of the present disclosure is to provide a system for manufacturing any one of the above polyolefin microporous membranes. The system sequentially includes, along a production line direction, a dual-spindle extruder, a casting machine, a pore-forming agent removing unit, a first stretching apparatus, a second stretching apparatus, a heat treatment machine, and a winding machine.

Furthermore, the pore-forming agent removing unit includes a tank, a driving hot roller, a driven hot roller, and a pore-forming agent removal liquid; the tank is a sealed tank, and a polyolefin microporous thin sheet from the casting machine passes through a path which is an open design.

Furthermore, the pore-forming agent removal liquid is located inside the sealed tank; the driving hot roller is located higher than a liquid level of the pore-forming agent removal liquid; the driven hot roller is immersed in the pore-forming agent removal liquid.

Furthermore, the second stretching apparatus and the heat treatment machine are integrated together.

Another object of the present disclosure is to provide a battery separator, which includes any one of the above polyolefin microporous membranes.

Furthermore, the separator is one of a ceramic-coated separator, a PVDF-coated separator, and an aramid-coated separator.

Another object of the present disclosure is to provide an electrochemical apparatus, including any one of the above polyolefin microporous membranes or any battery separator serving as an element for separating positive and negative electrodes.

The present disclosure has the following beneficial effects: compared with the existing microporous membranes, the polyolefin microporous membrane prepared by using the method of the present disclosure can better satisfy the applications having high requirements for uniform thickness, ultra-thinness, and high strength for the microporous membranes, and hence is suitable for the field of the power lithium ion battery separators.

## BRIEF DESCRIPTIONS OF THE DRAWINGS

FIG. 1 is a schematic diagram illustrating a pore-forming agent removing unit according to an example of the present disclosure.

FIG. 2 is a flowchart illustrating a preparation process of a polyolefin microporous membrane in the prior arts.

FIG. 3 is a flowchart illustrating a preparation process of a polyolefin microporous membrane according to an example of the present disclosure.

FIG. 4 is a flowchart illustrating a preparation process of a polyolefin microporous membrane according to another example of the present disclosure.

Numerals of the elements are described below:

1. driving hot roller
2. driven hot roller
3. pore-forming agent removing liquid
4. extrusion
5. cooling into sheet
6. MD stretch
7. TD stretch
8. pore-forming agent removal
9. TD secondary stretching
10. SBS stretch

## DETAILED DESCRIPTIONS OF EMBODIMENTS

The specific examples of the present disclosure will be elaborated below in combination with accompanying drawings. It should be understood that the specific examples described herein are used only to describe and explain the present disclosure rather than limit the present disclosure.

An example of the present disclosure provides a polyolefin microporous membrane with a thickness of 2 to 30 $\mu$m and a puncture strength of 1000 to 2000gf.

Furthermore, a tensile strength along an MD direction is 3200 to 5000kgf/cm$^2$, and a tensile strength along a TD direction is 2800 to 4800kgf/cm$^2$.

Furthermore, an elongation along the MD direction is 47 to 98% and an elongation along the TD direction is 63 to 110%.

Furthermore, a porosity is 40% to 57%, a maximum pore size is 33 to 48 nm, and a gas permeability is 10 to 400 seconds/100ml.

Furthermore, an impedance is 0.3 to 0.9$\Omega$/cm$^2$.

Furthermore, the polyolefin microporous membrane is made of polyethylene with a weight average molecular weight of 4.0 to 8.0$\times$106.

A specific example of the present disclosure provides a system for manufacturing any one of the above polyolefin microporous membranes. The system sequentially includes, along a production line direction, a dual-spindle extruder, a casting machine, a pore-forming agent removing unit, a first stretching apparatus, a second stretching apparatus, a heat treatment machine, and a winding machine.

Furthermore, the pore-forming agent removing unit includes a tank, a driving hot roller, a driven hot roller, and a pore-forming agent removal liquid; the tank is a sealed tank, and a polyolefin microporous thin sheet from the casting machine passes through a path which is an open design.

Furthermore, the pore-forming agent removal liquid is located inside the sealed tank; the driving hot roller is located higher than a liquid level of the pore-forming agent removal liquid; the driven hot roller is immersed in the pore-forming agent removal liquid.

Furthermore, the second stretching apparatus and the heat treatment machine are integrated together.

A specific example of the present disclosure provides a battery membrane, which includes any one of the above polyolefin microporous membranes.

Furthermore, the separator is one of a ceramic-coated separator, a PVDF-coated separator, and an aramid-coated separator.

A specific example of the present disclosure provides an electrochemical apparatus, which includes any one of the above polyolefin microporous membranes or any battery separator serving as an element for separating positive and negative electrodes.

A specific example of the present disclosure provides a preparation method for the polyolefin microporous membrane claimed by the present disclosure, and sequentially includes the following steps.

(1) Polyolefin resin and a pore-forming agent are mixed and heated to a mixed solution in a molten state.
(2) The mixed solution is extruded out of a die head and cooled to form a cast thin sheet containing the pore-forming agent.
(3) The cast thin sheet passes through a boiled pore-forming agent removing unit to remove the pore-forming agent.
(4) The cast thin sheet with the pore-forming agent removed is stretched along at least one axial direction to obtain a basal membrane.
(5) The basal membrane is stretched again along at least one axial direction for molding to obtain the polyolefin microporous membrane.

The boiled pore-forming agent removing unit includes a tank, a driving hot roller 1, a driven hot roller 2, and a pore-forming agent removal liquid 3; the driving hot roller 1 and the driven hot roller 2 may be heated at the temperature of 50°C to 140°C; the residual rate of the pore-forming agent of the polyolefin microporous membrane is less than 0.05%, and preferably, 0.02%, and more preferably, 0.01%, and most preferably 0.

Furthermore, the pore-forming agent accounts for 40-50% of a total weight of the polyolefin resin and the pore-forming agent, and a kinematic viscosity at the temperature of 60°C is 5 to 200mm$^2$/s.

In the present disclosure, no special limitation is made to the pore-forming agent used herein as long as it can fully dissolve polyolefin. The pore-forming agent may be but is not limited to, for example, one or more of a liquid paraffin, a mineral, oil, and a soy bean oil. Most preferably, the pore-forming agent is a liquid paraffin.

The liquid paraffin as a pore-forming agent and the polyolefin resin, for example, polyethylene resin are melted, mixed, and extracted to form a porous structure with several layers of orientations inside a porous base material, which greatly increases a successive stretching multiple of the gel-like membrane sheet. The higher the stretching multiple and the crystallization degree are, the higher the mechanical strength of the porous base material. Hence, the liquid paraffin, as a pore-forming agent, can improve the tensile strength and the puncture strength of the porous thin membrane, and thus realize further thinning of the porous membrane.

Furthermore, the weight average molecular weight of the polyolefin resin is 4.0~8.0×10$^6$, and the polyethylene resin accounts for 50-60% of a total weight of the polyolefin resin and the pore-forming agent.

In the present disclosure, the term "polyolefin" refers to a polymer prepared by polymerizing or copolymerizing one or more olefins, which includes but is not limited to polyolefin resin that is selected from one or more of polyethylene, polypropylene, polyisoprene, or polybutylene. Furthermore, preferably, the polyolefin resin is polyethylene.

Furthermore, the driving hot roller 1 and the driven hot roller 2 are heated by hot oil flowing in the rollers.

Furthermore, the pore-forming agent removal liquid 3 is an organic solvent mutually soluble with the pore-forming agent. Preferably, the pore-forming agent removal liquid is dichloromethane.

Furthermore, the tank is a sealed tank, and a polyolefin microporous thin sheet from the casting machine passes through a path which is an open design.

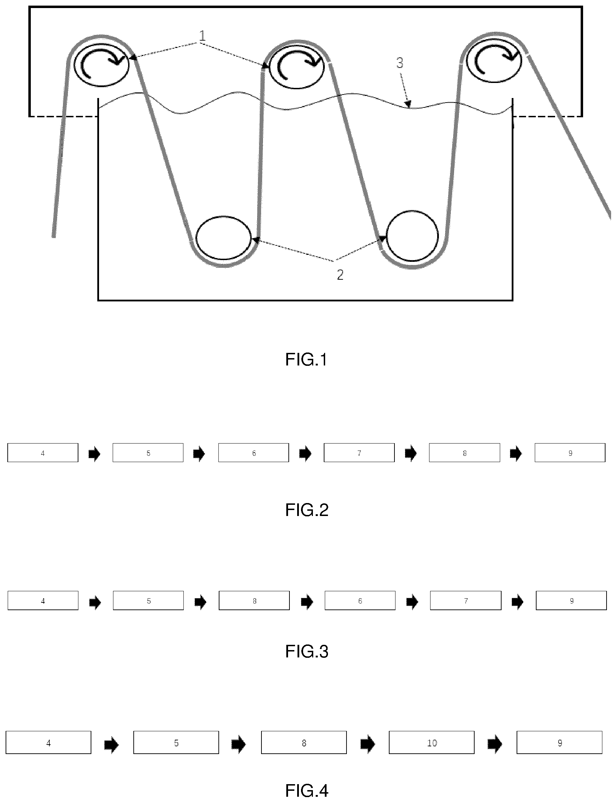

As shown in FIG. 1, furthermore, the pore-forming agent removal liquid 3 is located inside the sealed tank; the driving hot roller 1 is located higher than a liquid level of the pore-forming agent removal liquid 3; the driven hot roller 2 is immersed in the pore-forming agent removal liquid 3.

By introducing a heat transfer oil, the driving hot roller 1 and the driven hot roller 2 are heated to 50°C to 140°C.

Herein, the specific method of heating the driving hot roller 1 and the driven hot roller 2 is the same as the roller heating method at the time of MD and TD stretches 6 and 7, and both methods belong to the conventional technical means well known to those skilled in the art. Therefore, it is not necessary to make redundant descriptions herein. At this time, the polyolefin microporous thin sheet heated by the driving hot roller 1 and the driven hot roller 2 immersed in the pore-forming agent removal liquid 3 will heat dichloromethane at the temperature of 0 to 10°C in a normal state to a temperature of 30°C to 39.8°C.

During a heating process, the liquid molecules in the pore-forming agent removal liquid 3 will gain more kinetic energy due to heat transfer and become very active. The energy generated by the kinetic energy is enough to counteract an acting force between molecules, and thus its viscosity is lowered. Furthermore, the increased temperature speeds up molecular motion or vibration, such that the intermolecular repulsive force is increased. In order to achieve a balance again, the intermolecular distance will be increased and accordingly, the attractive force and repulsive force are decreased. As a result, the attractive force and the repulsive force reach a balance again, so as to reduce the tension of the liquid surface. In this way, the pore-forming agent removal liquid 3 will more easily enter the micropores, so as to improve the exchange rate and increase the efficiency of removing the pore-forming agent. In this case, the residual rate of the pore-forming agent will be lower than 0.05%. Furthermore, by preparing raw material formulas of different pore-forming agent proportions and using the different heated temperatures of the driving hot roller 1 and the driven hot roller 2, the efficiency of removing the pore-forming agent is improved such that the residual rate of the pore-forming agent is lower than 0.02%, or lower than 0.01% or even 0.

Furthermore, the stretch in step (4) is an asynchronous bidirectional stretch (MD+TD), or synchronous bidirectional stretch (SBS).

As shown in FIG. 3, when the stretch in step (4) is an asynchronous bidirectional stretch, after the pore-forming agent is removed by the pore-forming agent removing unit provided in the present disclosure, the roughness of the polyolefin thin sheet is increased, such that a frictional force between the roller surface and polyolefin thin sheet is increased at the time of MD roller surface stretch 6, thus avoiding slipping. Hence, in the present disclosure, the cast thin sheet of the formula with higher molecular weight (4.0 to $8.0 \times 10^6$) and higher powder ratio (50% to 60%) is firstly stretched 10 to 35 times along the MD direction and then stretched 10 to 20 times along the TD direction. Furthermore, preferably, it is firstly stretched 15 to 25 times along the MD direction and then stretched 10 to 15 times along the TD direction.

As shown in FIG. 4, when the stretch in step (4) is a synchronous bidirectional stretch, after the pore-forming agent is removed by the pore-forming agent removing unit provided in the present disclosure, the roughness of the polyolefin thin sheet is increased, such that a frictional force between a clamping device and the polyolefin thin sheet is increased at the time of the SBS clamping device stretch 10, avoiding slipping out of the clamping device. Thus, in the present disclosure, the cast thin sheet of the formula with higher molecular weight (4.0 to $8.0 \times 10^6$) and higher powder ratio (50% to 60%) is stretched 10 to 20 times and preferably 10 to 15 times.

Furthermore, the basal membrane in step (5) is stretched at the stretch ratio of 2 to 4 times again along at least one axial direction.

After being stretched with high multiples by using different methods, the final product separator will have more orientations and thus have a significantly-increased mechanical strength (tensile strength and puncture strength). Further, the phenomenon of closed or staggered micropores of the thin sheet generated due to slipping will be avoided, and more straight pores are generated. Thus, more lithium ion channels with a high straight pore ratio will be created, thus reducing the impedance of the separator.

The present disclosure will be detailed below by way of examples.

In the following examples and control examples, the membrane performance test is performed in the following method.

Membrane thickness: it is measured by using a Mahr thickness gauge in a spacing of 10cm in a width range of the finished product, and then an average membrane thickness value is obtained.

Air permeability value: at room temperature, an oken type air permeability meter is used to set a time for 100cc of gas to pass through the separator, and a stable value is obtained after five seconds of stable measurement.

Porosity: a sample of 100mm×100mm is taken and weighed by using an electronic balance and in combination with polyethylene density, and calculation is performed based on the formula: (1-weight/sample area)/weight×0.957×100%.

Maximum pore size: it is measured by using a narrow pore meter based on the bubble point method with nitrogen.

Tensile strength & elongation at break: it was measured by using an electronic universal material testing machine XJ830, with the sample specification 15mm×20cm and a travel speed of 200mm/min.

Puncture strength: a test sample is clamped and measured by using an electronic universal material testing machine XJ830 with a front end diameter of 1mm (0.5mmR) and a travel speed of 50mm/min.

Thermal shrinkage rate: a 100mm×100mm microporous membrane is maintained in a high temperature test chamber Espec SEG-021H for 1h at the temperature of 110°C, and measured for length by using an image measuring instrument XTY-5040, and then the lengths along the TD and MD directions before and after drying are calculated based on the formula:

$$\text{(before heat treatment} - \text{after heat treatment)/before heat treatment} \times 100\%.$$

Kinematic viscosity: it is measured by using a kinematic viscosity meter DSY-004 at the measurement temperature of 60°Cafter being stabilized for 1h.

Residual oil rate: a 10mm×10mm separator sample is cut and weighed by using an electronic balance; in the Ultrasonic Cleaner 1740T, pure water is placed and a 500ml beaker with 300ml of pure dichloromethane is placed, and then the sample is placed in, and ultrasonically treated for 60s and then dried in the drying oven of 105°C for 5min; and weights before and after cleaning are weighed by using an electronic balance and then the residual oil rate is calculated based on the formula: (weight before treatment - weight after treatment)/(weight before treatment) ×100%.

Impedance: by using a battery chamber sample injector, an electrolyte is injected to a 2/3 scale of the battery chamber, and then a resistance test channel is selected by using an Agilent data collector KEYSIGHT 34972A, and running is clicked on to wait for automatic analysis data of the equipment.

Example 1

Firstly, polyethylene with a weight percent of 50% (Mw is $8.0 \times 10^6$) and white oil with a weight percent of 50% were delivered into an extruder at the flow rate of 500kg/h for extrusion and then extruded out through a T-type die head under the conditions of 220°C and 100rpm, and then cooled by contact with a cold roller of 35°C to form a cast thin sheet. Next, the cast thin sheet entered the pore-forming agent removing unit. The driving hot roller 1 and the driven hot roller 2 were heated to 140°C through a heat transfer oil. Further, the dichloromethane in the tank was heated to 39.8°C and at this time, the pore-forming agent removal procedure was started. The cast thin sheet with the pore-forming agent removed was stretched 10 times by using a stretching machine along a mechanical direction (MD) 6 at the temperature of 120°C, and next stretched 10 times along a width direction (TD) 7 at the temperature of 100°C, and then subjected to secondary TD stretch 9 by two times at the temperature of 120°C for molding, and then wound by a winding roller to obtain a polyolefin microporous membrane with a thickness of 30μm.

Example 2

Firstly, polyethylene with a weight percent of 55% (Mw is $6.0 \times 10^6$) and white oil with a weight percent of 45%were delivered into an extruder at the flow rate of 650kg/h for extrusion, and then extruded out through a T-type die head under the conditions of 220°C and 100rpm, and then cooled by contact with a cold roller of 35°C to form a cast thin sheet. Next, the cast thin sheet entered the pore-forming agent removing unit. The driving hot roller 1 and the driven hot roller 2 were heated to 100°C through a heat transfer oil. Further, the dichloromethane in the tank was heated to 35°C and at this time, the pore-forming agent removal procedure was started. The cast thin sheet with the pore-forming agent removed was stretched 20 times by using a stretching machine along a mechanical direction (MD) 6 at the temperature of 120°C, and next stretched 15 times along a width direction (TD) 7 at the temperature of 100°C, and then subjected to secondary TD stretch 9 by two times at the temperature of 120°C for molding, and then wound by a winding roller to obtain a polyolefin microporous membrane with a thickness of 14μm.

Example 3

Firstly, polyethylene with a weight percent of 55% (Mw is $6.0 \times 10^6$) and white oil with a weight percent of 45% were delivered into an extruder at the flow rate of 400kg/h for extrusion and then extruded out through a T-type die head under the conditions of 220°C and 100rpm, and then cooled by contact with a cold roller of 35°C to form a cast thin sheet. Next, the cast thin sheet entered the pore-forming agent removing unit. The driving hot roller 1 and the driven hot roller 2 were heated to 100°C through a heat transfer oil. Further, the dichloromethane in the tank was heated to 35°C and at this time, the pore-forming agent removal procedure was started. The cast thin sheet with the pore-forming agent removed was stretched 20 times by using a stretching machine along a mechanical direction (MD) 6 at the temperature of 120°C, and next stretched 15 times along a width direction (TD) 7 at the temperature of 100°C, and then subjected to secondary TD stretch 9 by two times at the temperature of 120°C for molding, and then wound by a winding roller to obtain a polyolefin microporous membrane with a thickness of 9μm.

Example 4

Firstly, polyethylene with a weight percent of 55% (Mw is $6.0\times10^6$) and white oil with a weight percent of 45%were delivered into an extruder at the flow rate of 300kg/h for extrusion, and then extruded out through a T-type die head under the conditions of 220°C and 100rpm, and then cooled by contact with a cold roller of 35°C to form a cast thin sheet. Next, the cast thin sheet entered the pore-forming agent removing unit. The driving hot roller 1 and the driven hot roller 2 were heated to 100°C through a heat transfer oil. Further, the dichloromethane in the tank was heated to 35°C and at this time, the pore-forming agent removal procedure was started. The cast thin sheet with the pore-forming agent removed was stretched 20 times by using a stretching machine along a mechanical direction (MD) 6 at the temperature of 120°C, and next stretched 15 times along a width direction (TD) 7 at the temperature of 100°C, and then subjected to secondary TD stretch 9 by two times at the temperature of 120°C for molding, and then wound by a winding roller to obtain a polyolefin microporous membrane with a thickness of 7$\mu$m.

Example 5

Firstly, polyethylene with a weight percent of 60% (Mw is $4.0\times10^6$) and white oil with a weight percent of 40%were delivered into an extruder at the flow rate of 500kg/h for extrusion, and then extruded out through a T type die head under the conditions of 220°C and 100rpm, and then cooled by contact with a cold roller of 35°C to form a cast thin sheet. Next, the cast thin sheet entered the pore-forming agent removing unit. The driving hot roller 1 and the driven hot roller 2 were heated to 50°C through a heat transfer oil. Further, the dichloromethane in the tank was heated to 30°C and at this time, the pore-forming agent removal procedure was started. The cast thin sheet with the pore-forming agent removed was stretched 35 times by using a stretching machine along a mechanical direction (MD) 6 at the temperature of 120°C, and next stretched 20 times along a width direction (TD) 7 at the temperature of 100°C, and then subjected to secondary TD stretch 9 by two times at the temperature of 120°C for molding, and then wound by a winding roller to obtain a polyolefin microporous membrane with a thickness of 2$\mu$m.

Control example 1

In a conventional process, firstly, polyethylene with a weight percent of 20% (Mw is $3.5\times10^6$) and white oil with a weight percent of 80%were delivered into an extruder at the flow rate of 90kg/h for extrusion, and then extruded out through a T type die head under the conditions of 180°C and 80rpm, and then cooled by contact with a cold roller of 35°C to form a cast thin sheet. The cast thin sheet was stretched 9 times by using a stretching machine along a mechanical direction (MD) 6 at the temperature of 110°C, and next stretched 8 times along a width direction (TD) 7 at the temperature of 110°C, and then subjected to extraction procedure in the dichloromethane tank of 15°C to remove the pore-forming agent, and then subjected to secondary TD stretch 9 by two times at the temperature of 120°C for molding, and then wound by a winding roller to obtain a polyolefin microporous membrane with a thickness of 2$\mu$m.

Control example 2

In a conventional process, firstly, polyethylene with a weight percent of 20% (Mw is $3.5\times10^6$) and white oil with a weight percent of 80% were delivered into an extruder at the flow rate of 300kg/h for extrusion and then extruded out through a T-type die head under the conditions of 180°C and 80rpm, and then cooled by contact with a cold roller of 35°C to form a cast thin sheet. The cast thin sheet was stretched 9 times by using a stretching machine along a mechanical direction (MD) 6 at the temperature of 110°C, and next stretched 8 times along a width direction (TD) 7 at the temperature of 110°C, and then subjected to extraction procedure in the dichloromethane tank of 15°C to remove the pore-forming agent, and then subjected to secondary TD stretch 9 by two times at the temperature of 120°C for molding, and then wound by a winding roller to obtain a polyolefin microporous membrane with a thickness of 7$\mu$m.

Control example 3

In a conventional process, firstly, polyethylene with a weight percent of 20% (Mw is $3.5\times10^6$) and white oil with a weight percent of 80%were delivered into an extruder at the flow rate of 380kg/h for extrusion, and then extruded out through a T type die head under the conditions of 180°C and 80rpm, and then cooled by contact with a cold roller of 35°C to form a cast thin sheet. The cast thin sheet was stretched 9 times by using a stretching machine along a mechanical direction (MD) 6 at the temperature of 110°C, and next stretched 8 times along a width direction (TD) 7 at the temperature of 110°C, and then subjected to extraction procedure in the dichloromethane tank of 15°C to remove the pore-forming agent, and then subjected to secondary TD stretch 9 by two times at the temperature of 120°C for molding, and then wound by a winding roller to obtain a polyolefin microporous membrane with a thickness of 9$\mu$m.

Control example 4

In a conventional process, firstly, polyethylene with a weight percent of 20% (Mw is $3.5 \times 10^6$) and white oil with a weight percent of 80% were delivered into an extruder at the flow rate of 600kg/h for extrusion and then extruded out through a T type die head under the conditions of 180°C and 80rpm, and then cooled by contact with a cold roller of 35°C to form a cast thin sheet. The cast thin sheet was stretched 9 times by using a stretching machine along a mechanical direction (MD) 6 at the temperature of 110°C, and next stretched 8 times along a width direction (TD) 7 at the temperature of 110°C, and then subjected to extraction procedure in the dichloromethane tank of 15°C to remove the pore-forming agent, and then subjected to secondary TD stretch 9 by two times at the temperature of 120°C for molding, and then wound by a winding roller to obtain a polyolefin microporous membrane with a thickness of 14μm.

Control example 5

In a conventional process, firstly, polyethylene with a weight percent of 20% (Mw is $3.5 \times 10^6$) and white oil with a weight percent of 80%were delivered into an extruder at the flow rate of 800kg/h for extrusion, and then extruded out through a T type die head under the conditions of 180°C and 80rpm, and then cooled by contact with a cold roller of 35°C to form a cast thin sheet. The cast thin sheet was stretched 6 times by using a stretching machine along a mechanical direction (MD) 6 at the temperature of 110°C, and next stretched 8 times along a width direction (TD) 7 at the temperature of 110°C, and then subjected to extraction procedure in the dichloromethane tank of 15°C to remove the pore-forming agent, and then subjected to secondary TD stretch 9 by two times at the temperature of 120°C for molding, and then wound by a winding roller to obtain a polyolefin microporous membrane with a thickness of 30μm.

Separator performance test results of examples 1 to 5 and control examples 1 to 5 are shown in Table 1.

Table 1 Comparison table of separator performances of examples and control examples

| Serial number | | Control example 1 | Control example 2 | Control example 3 | Control example 4 | Control example 5 | Exa mpl el | Exa mple 2 | Exa mple 3 | Exa mple 4 | Exa mple 5 |
|---|---|---|---|---|---|---|---|---|---|---|---|
| Process | | | | | | | | | | | |
| PE | Molecul ar weight (Mw) | $3.5 \times 10^6$ | $3.5 \times 10^6$ | $3.5 \times 10^6$ | $3.5 \times 10^6$ | $3.5 \times 10^6$ | $8.0 \times 10^6$ | $6.0 \times 10^6$ | $6.0 \times 10^6$ | $6.0 \times 10^6$ | $4.0 \times 10^6$ |
| | Content (wt%) | 20 | 20 | 20 | 20 | 20 | 50 | 55 | 55 | 55 | 60 |
| White oil | Viscosit y (60°C) mm2/s | 30 | 30 | 30 | 30 | 30 | 30 | 30 | 30 | 30 | 30 |
| | Content (wt%) | 80 | 80 | 80 | 80 | 80 | 50 | 45 | 45 | 45 | 40 |
| Feed | Weight (kg/h) | 90 | 300 | 380 | 600 | 800 | 500 | 650 | 400 | 300 | 500 |
| Dichlorometh ane | Purity % | 99.99 | 99.99 | 99.99 | 99.99 | 99.99 | 99.9 9 | 99.9 9 | 99.9 9 | 99.9 9 | 99.9 9 |
| | Flow rate $m^3$/h | 10 | 10 | 10 | 10 | 10 | 5 | 5 | 5 | 5 | 5 |
| Melting and extrusion | Temper ature °C | 180 | 180 | 180 | 180 | 180 | 220 | 220 | 220 | 220 | 220 |
| | Rotation rpm | 80 | 80 | 80 | 80 | 80 | 100 | 100 | 100 | 100 | 100 |
| Cooling | Temper ature °C | 35 | 35 | 35 | 35 | 35 | 35 | 35 | 35 | 35 | 35 |
| Heat transfer oil roller | Temper ature °C | - | - | - | - | - | 140 | 100 | 100 | 100 | 50 |
| Removal of pore-forming agent | Temper ature °C | 15 | 15 | 15 | 15 | 15 | 39.8 | 35 | 35 | 35 | 30 |
| | Time s | 500 | 500 | 500 | 500 | 500 | 270 | 270 | 270 | 270 | 270 |
| MD stretch | Temper ature °C | 110 | 110 | 110 | 110 | 110 | 120 | 120 | 120 | 120 | 120 |
| | Times | 9 | 9 | 9 | 9 | 6 | 10 | 20 | 20 | 20 | 35 |
| TD1 stretch | Temper ature °C | 110 | 110 | 110 | 110 | 110 | 100 | 100 | 100 | 100 | 100 |
| | Times | 8 | 8 | 8 | 8 | 8 | 10 | 15 | 15 | 15 | 20 |

(continued)

| Serial number | | Control example 1 | Control example 2 | Control example 3 | Control example 4 | Control example 5 | Exa mpl el | Exa mple 2 | Exa mple 3 | Exa mple 4 | Exa mple 5 |
|---|---|---|---|---|---|---|---|---|---|---|---|
| Process | | | | | | | | | | | |
| TD2 stretch | Temper ature °C | 120 | 120 | 120 | 120 | 120 | 120 | 120 | 120 | 120 | 120 |
| | Times | 2 | 2 | 2 | 2 | 2 | 2 | 2 | 2 | 2 | 2 |
| Separator characteristics | | | | | | | | | | | |
| Membrane thickness (um) | | 2 | 7 | 9 | 14 | 30 | 30 | 14 | 9 | 7 | 2 |
| Air permeability(s/100ml) | | 50 | 80 | 120 | 180 | 310 | 400 | 160 | 140 | 90 | 10 |
| Porosity(%) | | 40 | 41 | 40 | 40 | 39 | 47 | 53 | 42 | 41 | 57 |
| Maximum pore size(nm) | | 70 | 60 | 64 | 70 | 67 | 48 | 42 | 33 | 39 | 40 |
| Impedance ($\Omega$/cm$^2$) | | 1.1 | 1.2 | 1.4 | 1.5 | 1.8 | 0.9 | 0.6 | 0.3 | 0.4 | 0.4 |
| Puncture strength (gf) | | 100 | 200 | 300 | 500 | 850 | 200 0 | 1600 | 1400 | 1200 | 1000 |
| Tensile strength kgf/cm$^2$ | MD | 1800 | 1900 | 1900 | 2200 | 1900 | 500 0 | 4400 | 4300 | 3900 | 3200 |
| | TD | 1700 | 2000 | 1950 | 2100 | 1900 | 480 0 | 3500 | 3400 | 3200 | 2800 |
| Elongation % | MD | 55 | 67 | 70 | 50 | 40 | 47 | 50 | 98 | 93 | 70 |
| | TD | 60 | 72 | 66 | 60 | 40 | 63 | 90 | 105 | 95 | 110 |
| Thermal shrinkage 110°C 1h | MD | 3.1 | 2.6 | 3.3 | 4.3 | 2.3 | 1.2 | 3.4 | 2.7 | 2.1 | 2.4 |
| | TD | 2.7 | 1.8 | 2.1 | 2.5 | 2.6 | 1.3 | 1.1 | 2.6 | 1.7 | 1 |
| Residual oil rate (%) | | 1.10 | 1.12 | 1.18 | 1.23 | 1.92 | 0.02 | 0.02 | 0.01 | 0.02 | 0.01 |

By comparison of examples 1 to 5 and the control examples 1 to 5, it can be seen that the polyolefin microporous membrane has approximate air permeability, but is superior in porosity and thermal shrinkage rate and significantly improved in puncture strength and tensile strength and significantly reduced in impedance.

In the present disclosure, the polyolefin microporous membrane has excellent performance and its thickness, tensile strength, puncture strength, air permeability, porosity, and thermal shrinkage rate all can satisfy the applications having high requirements for the thickness and mechanical strength of the microporous membranes, and hence suitable for the field of power lithium ion battery separators.

The polyolefin microporous membrane prepared by the method of the present disclosure is also suitable for the fields such as humidifying membrane, water purification membrane, artificial dialysis membrane, nanofiltration membrane, ultrafiltration membrane, reverse osmosis membrane and the like, and a cell reproduction substrate and the like.

The contents of common knowledge involved above will not be described in detail (it is a conventional practice in this field to regulate the thickness of the separator by a feed amount) and also can be understood by those skilled in the arts.

The above examples are used only to illustrate the principle and effect of the present disclosure rather than to limit the present disclosure. Those skilled in the arts can make modifications or changes to the above examples without departing from the spirit and scope of the present disclosure. Therefore, all equivalent modifications or changes made by persons having common knowledge in the art without departing from the spirit and technical idea of the present disclosure shall all be covered by the claims of the present disclosure.

## Claims

1. A polyolefin microporous membrane, having a thickness of 2 to 30$\mu$m and a puncture strength of 1000 to 2000gf.

2. The polyolefin microporous membrane of claim 1, wherein a tensile strength along an MD direction is 3200 to 5000kgf/cm$^2$, and a tensile strength along a TD direction is 2800 to 4800kgf/cm$^2$.

3. The polyolefin microporous membrane of claim 1, wherein an elongation along the MD direction is 47 to 98% and an elongation along the TD direction is 63 to 110%.

4. The polyolefin microporous membrane of claim 1, wherein a porosity is 40% to 57%, a maximum pore size is 33 to 48 nm, and a gas permeability is 10 to 400 seconds/100ml.

5. The polyolefin microporous membrane of claim 1, wherein an impedance is 0.3 to 0.9$\Omega$/cm$^2$.

6. The polyolefin microporous membrane of claim 1, wherein the polyolefin microporous membrane is made of polyethylene with a weight average molecular weight of $4.0\sim8.0\times10^6$.

7. A system for manufacturing the polyolefin microporous membrane of any one of claims 1 to 6, sequentially comprising, along a production line direction, a dual-spindle extruder, a casting machine, a pore-forming agent removing unit, a first stretching apparatus, a second stretching apparatus, a heat treatment machine and a winding machine.

8. The system of claim 7, wherein the pore-forming agent removing unit comprises a tank, a driving hot roller, a driven hot roller, and a pore-forming agent removal liquid; the tank is a sealed tank, and a polyolefin microporous thin sheet from the casting machine passes through a path which is an open design.

9. The system of claim 8, wherein the pore-forming agent removal liquid is located inside the sealed tank; the driving hot roller is located higher than a liquid level of the pore-forming agent removal liquid; the driven hot roller is immersed in the pore-forming agent removal liquid.

10. The system of claim 7, wherein the second stretching apparatus and the heat treatment machine are integrated together.

11. A battery separator, wherein the battery separator comprises the polyolefin microporous membrane of any one of claims 1 to 6.

12. The battery separator of claim 11, wherein the separator is one of a ceramic-coated separator, a PVDF-coated separator and an aramid-coated separator.

13. An electrochemical apparatus, comprising the polyolefin microporous membrane of any one of claims 1 to 6 or the battery separator serving as an element for separating positive and negative electrodes according to claim 11 or 12.

FIG.1

FIG.2

FIG.3

FIG.4

**INTERNATIONAL SEARCH REPORT**

| International application No. |
| --- |
| **PCT/CN2021/118236** |

**A. CLASSIFICATION OF SUBJECT MATTER**

C08J 5/18(2006.01)i; C08L 23/06(2006.01)i; C08J 9/26(2006.01)i; H01M 50/403(2021.01)i; H01M 50/417(2021.01)i

According to International Patent Classification (IPC) or to both national classification and IPC

**B. FIELDS SEARCHED**

Minimum documentation searched (classification system followed by classification symbols)

C08J; C08L; H01M

Documentation searched other than minimum documentation to the extent that such documents are included in the fields searched

Electronic data base consulted during the international search (name of data base and, where practicable, search terms used)

DWPI; SIPOABS; CNABS; CNKI; Elsevier: 穿刺强度, 戳穿强度, 刺穿强度, 聚烯烃, 聚乙烯, 聚丙烯, 膜, 成孔剂, 孔剂, 石蜡, 矿物油, 大豆油, 驱动辊, puncture strength, polyolefin, polyethylene, polypropylene, film, membrane, pore former, pore agent, paraffin, mineral oil, soybean oil, drive roller

**C. DOCUMENTS CONSIDERED TO BE RELEVANT**

| Category* | Citation of document, with indication, where appropriate, of the relevant passages | Relevant to claim No. |
| --- | --- | --- |
| PX | CN 112592500 A (SHANGHAI ENERGY NEW MATERIALS TECHNOLOGY CO., LTD.) 02 April 2021 (2021-04-02) claims 1-13 | 1-13 |
| PX | CN 112592510 A (SHANGHAI ENERGY NEW MATERIALS TECHNOLOGY CO., LTD.) 02 April 2021 (2021-04-02) embodiments 1-6 | 1-13 |
| X | WO 2020137336 A1 (TORAY INDUSTRIES) 02 July 2020 (2020-07-02) embodiments 1-3 and description paragraphs 0009-0077 | 1-13 |
| X | CN 111032758 A (TORAY INDUSTRIES, INC.) 17 April 2020 (2020-04-17) embodiment 1 | 1-13 |
| X | CN 109400942 A (RUIZHI NEW MATERIALS (SHENZHEN) CO., LTD.) 01 March 2019 (2019-03-01) embodiment 1 | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 December 2021** | **14 December 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/118236**

| Patent document cited in search report | | | Publication date (day/month/year) | Patent family member(s) | | | Publication date (day/month/year) |
|---|---|---|---|---|---|---|---|
| CN | 112592500 | A | 02 April 2021 | None | | | |
| CN | 112592510 | A | 02 April 2021 | None | | | |
| WO | 2020137336 | A1 | 02 July 2020 | CN | 112424271 | A | 26 February 2021 |
| CN | 111032758 | A | 17 April 2020 | KR | 20200060353 | A | 29 May 2020 |
| | | | | WO | 2019065073 | A1 | 04 April 2019 |
| | | | | JP | WO2019065073 | A1 | 03 September 2020 |
| | | | | TW | 201920406 | A | 01 June 2019 |
| CN | 109400942 | A | 01 March 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102136557 A